# EUROPÄISCHE PATENTSCHRIFT

(11) **EP 1 819 570 B1**
(45) Veröffentlichungstag und Bekanntmachung des Hinweises auf die Patenterteilung: **17.06.2009**
(21) Anmeldenummer: 05850254.3
(22) Anmeldetag: 12.12.2005
(51) Int. Cl.: B61H 11/06, B60T 1/087, F16D 57/04

(54) **FAHRZEUG MIT ZWEI GLEICHWERTIGEN ENTGEGENGESETZTEN FAHRTRICHTUNGEN AUSGESTATTET MIT EINER HYDRODYNAMISCHEN BREMSE**
VEHICLE COMPRISING TWO BALANCED OPPOSITE DRIVING DIRECTIONS FITTED WITH A HYDRODYNAMIC BRAKE
VEHICULE A DEUX SENS DE DEPLACEMENT OPPOSES DE MEME VALEUR EQUIPE D'UN FREIN HYDRODYNAMIQUE

(30) Priorität: 11.12.2004 DE 102004059736
(43) Veröffentlichungstag der Anmeldung: 22.08.2007
(73) Patentinhaber: Voith Turbo GmbH & Co. KG, 89522 Heidenheim (DE)
(72) Erfinder: VOGELSANG, Klaus, 74564 Crailsheim (DE); EDELMANN, Peter, 89518 Heidenheim (DE)
(74) Vertreter: Dr. Weitzel & Partner
(86) Internationale Anmeldenummer: PCT/EP2005/013310
(87) Internationale Veröffentlichungsnummer: WO 2006/061250

(56) Entgegenhaltungen:
- BE-A- 413 693
- DE-A1- 3 535 494
- DE-A1- 3 738 745
- DE-U1- 8 529 980

## Beschreibung

Die Erfindung betrifft ein Fahrzeug mit zwei gleichwertigen entgegengesetzten Fahrtrichtungen, insbesondere ein Schienenfahrzeug, wie einen Waggon oder eine Lokomotive.

Fahrzeuge mit zwei gleichwertigen Fahrtrichtungen im Sinne der vorliegenden Erfindung zeichnen sich dadurch aus, dass sie ohne Einschränkung in der Rückwärtsrichtung genauso gut wie in der Vorwärtsrichtung gefahren werden können. Somit ist sowohl der Antriebsstrang, falls das Fahrzeug ein selbstantreibendes Fahrzeug ist, als auch die Bremsanlage mit derselben Leistung für beide entgegengesetzte Fahrtrichtungen ausgelegt. Insbesondere kommen schienengebundene Fahrzeuge, wie Waggons oder Lokomotiven, in Betracht. Alternativ kann die Erfindung jedoch auch bei Landfahrzeugen, beispielsweise Kettenfahrzeugen, Anwendung finden.

Heutzutage sind Fahrzeuge mit zwei gleichwertigen entgegengesetzten Fahrtrichtungen hauptsächlich im Schienenverkehr verbreitet. Dabei werden diese Fahrzeuge häufig mittels Elektromotoren angetrieben, welche die notwendige elektrische Leistung aus einem Oberleitungsnetz aufnehmen. Wenn solche Schienenfahrzeuge, insbesondere die Lokomotiven, gebremst werden sollen, wird der Leistungsfluss in den Elektromotoren derart umgekehrt, dass die Motoren als Generatoren arbeiten, somit elektrische Leistung und eine Bremswirkung erzeugen, und die von den Motoren erzeugte elektrische Leistung wird in das elektrische Netz eingespeist, wo es zum Antrieb anderer Züge zur Verfügung steht.

Problematisch bei dieser Vorgehensweise ist, dass bei kleinen elektrischen Netzen insbesondere das gleichzeitige Bremsen mehrerer Züge durch eine entsprechend große Einspeisung von elektrischer Leistung in das Netz zu einer Spannungserhöhung im Netz führen kann, was unerwünscht ist. Dieses Problem tritt insbesondere dann auf, wenn anders als beispielsweise im Oberleitungsnetz im deutschen Schienenverkehr kein weitumfassendes Verbundnetz verwendet wird, sondern einzelne Netzbereiche isoliert voneinander betrieben werden.

Neben der Umschaltung der elektrischen Antriebsmotoren in Generator werden auch mechanische Stellbremsen zum Abbremsen der Schienenfahrzeuge verwendet. Diese mechanischen Stellbremsen weisen jedoch einerseits den Nachteil auf, dass sie einem Verschleiß unterliegen und andererseits jeweils nur auf eine einzige Radachse beziehungsweise einen einzigen Radsatz oder ein einziges Rad wirken, was einer optimalen Abbremsung des betreffenden Fahrzeugs nicht gerecht wird.

Ein weiterer Nachteil der bekannten mechanischen Bremsen ist der erhebliche Geräuschpegel, welchen sie bei der Bremsung erzeugen.

Die Offenlegungsschrift DE 35 35 494 A1 beschreibt einen hydrodynamischen Retarder mit zwei konzentrisch ineinander angeordneten Arbeitsräumen, welche mit einer gegensinnig schrägen Beschaufelung ausgerüstet sein können, um in einem Schienenfahrzeug zwei Radsätze, von denen der eine das Primärschaufelrad und der andere das Sekundärschaufelrad antreibt, abzubremsen. Die Herstellung eines solchen Retarders ist aufgrund der Gestaltung der Arbeitsräume äußerst kostenintensiv.

Die Offenlegungsschrift DE 38 33 761 A1 beschreibt einen Gegenlaufretarder für ein Fahrzeug mit einer einzigen Fahrtrichtung, um zwei Achsen des Fahrzeugs abzubremsen. Es handelt sich demnach nicht um ein Fahrzeug mit zwei gleichwertigen entgegengesetzten Fahrtrichtungen wie ein Schienenfahrzeug.

Der Erfindung liegt die Aufgabe zugrunde, ein Fahrzeug mit zwei gleichwertigen entgegengesetzten Fahrtrichtungen darzustellen, das eine verschleißfreie Bremse aufweist, die einerseits ihre Bremswirkung auf wenigstens zwei Radachsen gleichmäßig verteilt und zugleich unabhängig von der Fahrtrichtung stets dieselbe verschleißfreie Bremsleistung erbringt. Dabei soll die Bremswirkung, welche mit der verschleißfreien Bremse erreicht wird, gegenüber den bekannten Ausführungen verbessert sein.

Die Erfindung wird durch ein Fahrzeug mit den Merkmalen des Anspruchs 1 und des Anspruchs 13 gelöst. Die Unteransprüche beschreiben vorteilhafte und besonders zweckmäßige Ausgestaltungen des erfindungsgemäßen Fahrzeugs.

Die Erfinder haben einen besonders wirkungsvollen Weg erkannt, um zwei Radachsen eines Fahrzeugs, insbesondere eines Schienenfahrzeugs, beispielsweise eines Waggons oder einer Lokomotive, stets mit der identischen oder im wesentlichen identischen Bremsleistung gleichzeitig verschleißfrei abzubremsen. Diese zweifachwirkende Abbremsung wird erfindungsgemäß durch die Verwendung eines sogenannten Gegenlaufretarders erreicht, das heißt einer hydrodynamischen Bremse mit zwei entgegengesetzt zueinander angeordneten Schaufelrädern, die sich in entgegengesetzten Richtungen drehen.

Erfindungsgemäß wird dabei jeweils ein Schaufelrad von einer Radachse angetrieben, wobei die beiden Triebverbindungen relativ zueinander derart gestaltet sind, dass in einer Triebverbindung der Drehsinn der Eingangswelle, das heißt der ersten Radachse, mit dem Drehsinn der Ausgangswelle, das heißt der das Schaufelrad tragenden oder integral mit dem Schaufelrad ausgebildeten Welle derselbe ist übereinstimmt, wobei jedoch eine winklige Versetzung zwischen der Eingangswelle und der Ausgangswelle, beispielsweise um 90 Grad, vorgesehen sein kann. Demgegenüber wird der Drehsinn der zweiten Radachse in der Triebverbindung zum zweiten Schaufelrad umgekehrt, beispielsweise durch Hinzufügen eines Zwischenrades in einem Zahnradgetriebe oder durch die Anordnung einer Kegelrads auf einer gegenüber einem Kegelrad in der Triebverbindung der andere Radachse entgegengesetzten Seite der jeweiligen Radachse, mit dem Ergebnis, dass das eine der beiden Schaufelräder in der anderen Richtung umläuft wie das andere der beiden Schaufelräder.

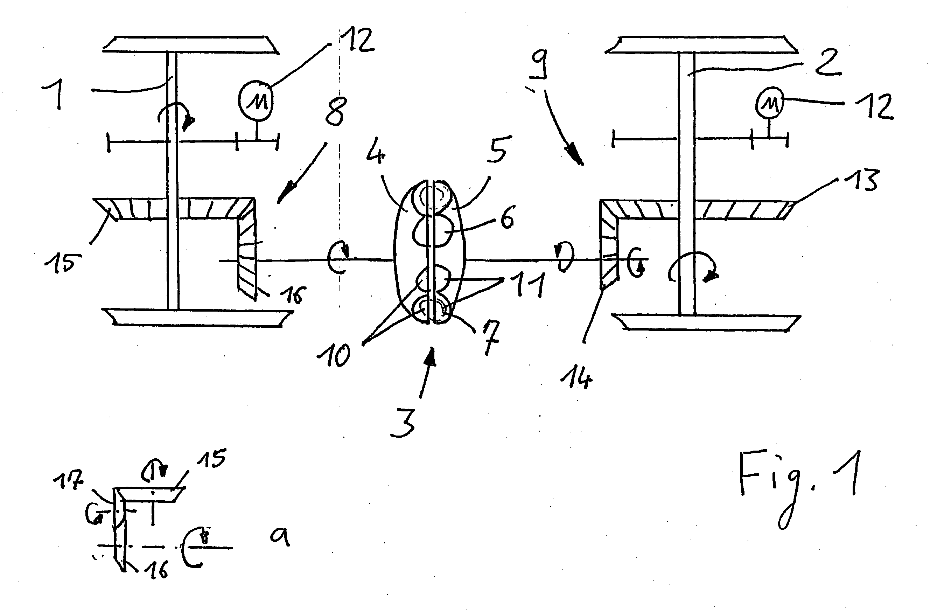

Die Triebverbindungen zwischen den Radachsen und den Schaufelrädern sind dabei erfindungsgemäß mechanisch ausgeführt, das heißt durch reibschlüssige und/oder kraftschlüssige Drehverbindungen. Beispielsweise kann die erste mechanische Triebverbindung zwischen der ersten Radachse und dem ersten Schaufelrad (Primärschaufelrad) durch zwei Zahnräder oder vorteilhaft durch zwei Kegelräder beziehungsweise zwei Kegelzahnräder ausgeführt sein, wohingegen die zweite mechanische Triebverbindung wenigstens oder genau ein Rad, insbesondere Zahnrad oder Kegelrad, mehr beinhaltet als die erste mechanische Triebverbindung. Beispielsweise können in der zweiten mechanischen Triebverbindung drei hintereinander geschaltete Kegelzahnräder, verwendet werden. Alternativ kann eine Drehrichtungsumkehr auch durch eine entsprechende Anordnung derselben Anzahl von Kegelrädern in jeder Triebverbindung erreicht werden, wie weiter unter mit Bezug auf die Figur 1 näher beschrieben wird.

Die Erfinder haben ferner erkannt, dass eine besonders hohe Bremsleistung dadurch erreicht werden kann, dass die mechanischen Triebverbindungen, über welche die beiden Schaufelräder angetrieben werden, derart verschieden zueinander gestaltet sind, dass sich im Bremsbetrieb eine Differenz zwischen den Beträgen der Drehzahl des Primärschaufelrads und des Sekundärschaufelrads einstellt. Dies kann durch eine abweichende Übersetzung in den beiden mechanischen Triebverbindungen erreicht werden.

Alternativ oder zusätzlich zu dieser Drehzahldifferenz zwischen den beiden Schaufelrädern kann eine entsprechend verbesserte Bremsleistung auch dadurch erzielt werden, dass bei dem Vorsehen von zwei Arbeitsräumen mit einer entgegengesetzt zueinander ausgeführten Schrägbeschaufelung, wie sie nachfolgend beschrieben wird, der Schrägstellungswinkel der Beschaufelung beider Arbeitsräume gegenüber einem Schnitt durch die Beschaufelung in Umfangsrichtung abweichend voneinander ausgeführt ist.

Um eine besonders große Bremsleistung zu erzeugen, bilden das Primärschaufelrad und das Sekundärschaufelrad gemäß einer vorzuziehenden Ausführung der Erfindung zwei Arbeitsräume miteinander aus, die beispielsweise in einer gemeinsamen Radialebene angeordnet sein können, das heißt der eine Arbeitsraum umschließt den anderen Arbeitsraum. In dieser Ausführung ist in den Arbeitsräumen eine Schrägbeschaufelung vorgesehen, das heißt die Schaufeln des Primärschaufelrades und des Sekundärschaufelrades sind spießend oder fliehend zueinander angeordnet. Die Begriffe spießend beziehungsweise fliehend in diesem Zusammenhang sind dem Fachmann aufgrund bekannter schräg beschaufelter Retarder bekannt. Die Schaufeln von schräg beschaufelten Retardern sind gegenüber einer beliebigen Axialebene durch die Drehachse des Retarders geneigt beziehungsweise gewinkelt ausgeführt, wobei die sich gegenüberstehenden Schaufeln des Primärschaufelrades und des Sekundärschaufelrades vorzugsweise miteinander fluchten. Man kann die Schrägstellung auch dadurch beschreiben, dass die Schaufeln in einem achsparallelen Schnitt, insbesondere abgewickelten Schnitt, in Umfangsrichtung durch die Schaufeln hindurch gegenüber dem Schaufelradboden beziehungsweise einer Senkrechten auf dem Schaufelradboden schräggestellt sind.

Bei der Ausführung der Erfindung mit einer hydrodynamischen Bremse mit zwei schräg beschaufelten Arbeitsräumen ist der Neigungswinkel der Schaufeln gegenüber einer Achssenkrechten in dem ersten Arbeitsraum entgegengesetzt zu dem entsprechenden Winkel in dem zweiten Arbeitsraum. Hierdurch wird folgendes erreicht: Durch die Ausführung von Retardem mit einer schrägen Beschaufelung wird eine besonders hohe Leistungszahl, das heißt eine besonders große Bremsleistung in einer bestimmten Drehrichtung, nämlich in der Drehrichtung, in welcher die Schaufeln der sich gegenüberstehenden Schaufelräder spießend zueinander ausgerichtet sind, erreicht, während in der entgegengesetzten Drehrichtung die Leistungszahl und damit das Bremsvermögen gegenüber einer geraden Beschaufelung, das heißt achsparallelen Beschaufelung, vermindert ist. Durch das Vorsehen von zwei Arbeitsräumen mit entgegengesetzter schräger Beschaufelung wird erreicht, dass unabhängig von der Drehrichtung mittels eines Arbeitsraumes eine besonders hohe Leistungszahl und damit eine besonders große Bremsleistung übertragen wird. Durch die schräge Beschaufelung in zwei Arbeitsräumen wird jedoch zugleich eine hydrodynamische Bremse geschaffen, welche sehr hohe Bremsmomente in beiden Drehrichtungen über einen großen Geschwindigkeitsbereich hinweg, von einer großen Fahrt- und damit Drehgeschwindigkeit der Schaufelräder bis zu einer kleinen Fahrt- und damit Drehgeschwindigkeit der Schaufelräder zur Verfügung stellt. Wie dargelegt, kann der Neigungswinkel der Schaufeln gegenüber einer Achssenkrechten im ersten Arbeitsraum in seinem Betrag abweichend vom Neigungswinkel der Schaufeln gegenüber einer Achssenkrechten in dem zweiten Arbeitsraum, insbesondere bei einer Abweichung von bis zu 10 %, bis zu 20 % oder bis zu 30 % oder 50 % ausgeführt sein.

Auch wenn bereits im Stand der Technik hydrodynamische Bremsen mit zwei Arbeitsräumen mit entgegengesetzt angeordneter schräger Beschaufelung bekannt sind, siehe beispielsweise DE 85 29 980 U, welche an einem Getriebe angeordnet sind und somit eine einzige Getriebewelle abbremsen, so haben die Erfinder erstmals ein Fahrzeug dargestellt, in denen ein erfindungsgemäß ausgebildeter Retarder unmittelbar zwischen zwei verschiedene Radachsen geschaltet ist und somit stets dieselbe Bremswirkung auf beide Radachsen ausübt, ohne dass dabei elektrische Leistung, welche abgeführt werden müsste, erzeugt wird.

Insbesondere bei Anordnung der erfindungsgemäßen hydrodynamischen Bremse in ständigen Triebverbindungen mit den Radachsen des Fahrzeugs ist wenigstens ein Schaufelrad der hydrodynamischen Bremse derart axial verschiebbar angeordnet, dass beim Umschalten vom Bremsbetrieb zum Nichtbremsbetrieb, das heißt beim Entleeren des oder der Arbeitsräume, die beiden Schaufelräder auseinander bewegt werden. Unter Entleeren wird dabei sowohl eine vollständige Entleerung als auch eine Entleerung bis auf eine vorgegebene Restarbeitsmediummenge, um eine möglichst geringe Verlustleistung zu erzeugen, verstanden. Das axiale Abfahren von wenigstens einem Schaufelrad gegenüber dem anderen trägt zu einer weiteren Verlustleistungsminimierung bei.

Um eine besonders hohe Bremsleistung im Bremsbetrieb zu erzeugen, ist in beiden mechanischen Triebverbindungen, das heißt in der ersten mechanischen Triebverbindung zwischen der ersten Radachse und dem Primärschaufelrad und der zweiten mechanischen Triebverbindung zwischen der zweiten Radachse und dem Sekundärschaufelrad, vorteilhaft jeweils eine Übersetzung ins Schnelle ausgebildet, so dass die beiden Schaufelräder mit einer höheren Geschwindigkeit umlaufen als die beiden Radachsen.

Die beiden sich gegenüberstehenden Beschaufelungen können vorteilhaft eine voneinander abweichende Schaufelzahl aufweisen, das heißt die Schaufelzahl des Primärrades im ersten Arbeitsraum ist unterschiedlich zu der Schaufelzahl des Sekundärrads im ersten Arbeitsraum, und die Schaufelzahl des Primärrads im zweiten Arbeitsraum ist unterschiedlich gegenüber der Schaufelzahl des Sekundärrads im zweiten Arbeitsraum.

Gemäß einer besonders einfachen Ausführung der Erfindung werden beide Arbeitsräume stets gleichzeitig befüllt und entleert. Dies wird insbesondere durch Vorsehen einer entsprechenden Steuereinrichtung zum Befüllen und Entleeren der beiden Arbeitsräume erreicht.

Insbesondere bei einer erfindungsgemäßen Ausführung einer Lokomotive beziehungsweise eines Triebwagens eines Zugs wird in einer Ausführung jede Radachse von jeweils wenigstens einem Motor, insbesondere einem Elektromotor, angetrieben. Somit kann die erfindungsgemäß vorgesehene hydrodynamische Bremse als zusätzliche oder vorteilhaft als alternative Bremse zu der Schaltung des Elektromotors als Generator verwendet werden.

Gemäß einer Ausführung der Erfindung wird eine Differenz zwischen den Beträgen der Drehzahlen des Primärschaufelrads und des Sekundärschaufelrads eingestellt. Dies wird dadurch erreicht, dass in der ersten mechanischen Triebverbindung eine Übersetzung, vorteilhaft ins Schnelle, mit einem Übersetzungsverhältnis ausgebildet ist, welches gegenüber dem Übersetzungsverhältnis einer in der zweiten mechanischen Triebverbindung vorgesehenen Übersetzung, vorteilhaft ins Schnelle, abweicht. Dabei kann die Drehzahldifferenz im Bereich zwischen 0, wobei der Wert 0 selbst ausgeschlossen ist, bis 20 Prozent liegen, vorteilhaft im Bereich von 10 Prozent oder 10 Prozent betragen. Somit läuft eines der beiden Schaufelräder beispielsweise mit bis zu der 1,2fachen Geschwindigkeit des anderen Schaufelrads um (bei bis zu 20% Drehzahldifferenz).

Die Erfindung soll nachfolgend anhand eines Ausführungsbeispiels und der zugehörigen Figuren mit der Figurenbeschreibung erläutert werden.
- Figur 1: zeigt eine schematische Darstellung eines erfindungsgemäß ausgeführten Waggons eines Schienenfahrzeugs;
- Figur 2: zeigt eine schematische Darstellung einer spießenden und einer fliehenden Anordnung der Beschaufelungen beider Arbeitsräume mit verschiedenen Schrägstellungswinkeln.

In der Figur 1 erkennt man die beiden Radachsen 1, 2, welche jeweils von einem Elektromotor 12 über ein Zahnradgetriebe angetrieben werden.

Jede Radachse 1, 2 trägt ein Kegelrad, die Radachse 1 das Kegelrad 15 und die Radachse 2 das Kegelrad 13. Ferner ist in dem Bereich jeder Radachse 1, 2 jeweils ein weiteres Kegelrad in einem kämmenden Eingriff mit dem von der Radachse getragenen Kegelrad angeordnet, vorliegend das Kegelrad 16, welches mit dem Kegelrad 15 auf der Radachse 1 kämmt, und das Kegelrad 14, welches mit dem Kegelrad 13 auf der Radachse 2 kämmt. Die Drehachsen der Kegelräder 14 und 16 sind um 90 Grad versetzt zu den Radachsen 1, 2 angeordnet und fluchten miteinander. Beide Kegelräder 14, 16 sind in Längsrichtung des Fahrzeugs zwischen den Radachsen 1, 2 angeordnet und laufen somit im zueinander entgegengesetzten Drehsinn um, siehe die Pfeile in der Figur 1 an den verschiedenen Achsen, welche die jeweilige Drehrichtung darstellen.

In Axialrichtung des Fahrzeugs zwischen den Kegelrädern 14 und 16 ist eine hydrodynamische Bremse konzentrisch mit den Drehachsen der Kegelräder 14, 16 angeordnet. Die hydrodynamische Bremse 3 umfasst ein Primärschaufelrad 4, welches in einer ersten mechanischen Triebverbindung 8, welche durch das Kegelrad 15 und das Kegelrad 16 ausgebildet wird, mit der ersten Radachse 1 steht.

Das Sekundärschaufelrad 5 wird mittels der zweiten mechanischen Triebverbindung 9, welche durch das Kegelrad 13 und das Kegelrad 14 ausgebildet wird, von der zweiten Radachse 2 angetrieben. Aufgrund des gegensinnigen Drehsinns der Kegelräder 14 und 16 dreht sich somit das Primärschaufelrad 4 entgegengesetzt zu dem Sekundärschaufelrad 5.

Das Primärschaufelrad 4 und das Sekundärschaufelrad 5 bilden miteinander zwei torusförmige Arbeitsräume 6, 7 aus, in welchen jeweils die schräge Beschaufelung 10 des Primärrades 4 und die schräge Beschaufelung 11 des Sekundärrades 5 angeordnet ist.

In dem beschriebenen Ausführungsbeispiel bestehen somit beide Triebverbindungen, die erste mechanische Triebverbindung 8 und die zweite mechanische Triebverbindung 9, jeweils genau aus zwei Kegelrädern, welche durch eine entsprechende, in einer Draufsicht gesehen spiegelbildlichen Anordnung über einer mittleren Querachse des Fahrzugs eine entgegengesetzte Drehrichtung der beiden Schaufelräder 4, 5 der hydrodynamischen Bremse 3 bewirken.

In der Einzelheit a ist eine alternative Ausführung für die erste mechanische Triebverbindung 8 dargestellt, deren zweites Kegelrad 16 außerhalb des Bereichs zwischen den beiden Radachsen 1, 2 angeordnet ist. Um trotzdem die gewünschte Drehrichtungsumkehr zu erreichen, ist ein Zwischenrad 17, welches ebenfalls als Kegelzahnrad ausgeführt ist, zwischen das erste Kegelrad 15 und das zweite Kegelrad 16 geschaltet.

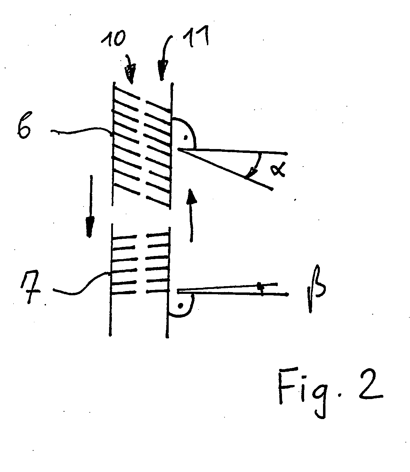

In der Figur 2 erkennt man schematisch die verschiedenen Schrägstellungswinkel α, β gegenüber einer Senkrechten auf den Schaufelradböden der Beschaufelungen 10, 11 jeweils des ersten Arbeitsraums 6 und des zweiten Arbeitsraums 7. Die Schaufeln sind dabei in einem achsparallelen Schnitt in Umfangsrichtung durch die Beschaufelung dargestellt. Die beiden Pfeile links und rechts unmittelbar neben den Schaufelradböden (welche durch die senkrechten Linien dargestellt werden) zeigen die entgegengesetzt zueinander gerichtete Drehrichtung der Beschaufelungen 10, 11 an. Im ersten Arbeitsraum 6 bewegen sich die beiden Beschaufelungen 10, 11 spießend zueinander, wohingegen sie sich im zweiten Arbeitsraum 7 fliehend zueinander bewegen.

Der Winkel α der Schrägstellung der Beschaufelungen 10, 11 im ersten Arbeitsraum 6 ist in seiner Richtung entgegengesetzt zu dem Winkel β der Beschaufelungen 10, 11 im zweiten Arbeitsraum 7 ausgeführt. Gleichzeitig weicht der Winkel α in seinem Betrag von dem Winkel β ab; vorliegend ist der Betrag des Winkels α größer als derjenige des Winkels β.

Das erfindungsgemäß ausgebildete Fahrzeug weist aufgrund der Mehrradbremsung ein verbessertes Bremsverhalten auf, insbesondere dann, wenn auf jedes Rad bzw. jede Achse dasselbe Bremsmoment aufgebracht wird, was durch die beschriebene Ausführung des Gegenlaufretarders erreicht wird.

## Patentansprüche

1. Fahrzeug mit zwei gleichwertigen entgegengesetzten Fahrtrichtungen, insbesondere Schienenfahrzeug, wie Waggon oder Lokomotive,
1.1 mit wenigstens einer ersten und einer zweiten Radachse (1, 2), welche Antriebsräder oder mitlaufende Räder tragen;
1.2 mit einer verschleißfreien Bremse zum Abbremsen des Fahrzeugs, welche in einer Triebverbindung mit den Radachsen (1, 2) steht; wobei
1.3 die verschleißfreie Bremse als hydrodynamische Bremse (3) mit einem Primärschaufelrad (4) und einem Sekundärschaufelrad (5), die sich derart gegenüberstehen, dass sie wenigstens einen mit einem Arbeitsmedium befüllbaren Arbeitsraum (6, 7) ausbilden, ausgeführt ist; und
1.4 das Primärschaufelrad (4) in einer ersten mechanischen Triebverbindung (8) mit der ersten Radachse (1) und das Sekundärschaufelrad (5) in einer zweiten mechanischen Triebverbindung (9) mit der zweiten Radachse (2) steht, wobei
1.5 eine der beiden Triebverbindungen (8, 9) eine Drehrichtungsumkehr beinhaltet, so dass sich das Primärschaufelrad (4) und das Sekundärschaufelrad (5) entgegengesetzt zueinander drehen;
**dadurch gekennzeichnet, dass**
1.6 die erste mechanische Triebverbindung (8) eine gegenüber der zweiten mechanischen Triebverbindung (9) abweichende Übersetzung aufweist, so dass sich im Bremsbetrieb eine Differenz zwischen den Beträgen der Drehzahl des Primärschaufelrads (4) und des Sekundärschaufelrads (5) einstellt.

2. Fahrzeug gemäß Anspruch 1, **dadurch gekennzeichnet, dass** das Primärschaufelrad (4) und das Sekundärschaufelrad (5) miteinander zwei Arbeitsräume (6, 7) ausbilden, in welchen sich jeweils eine gegenüber einer Axialschnittebene schräg angeordnete Beschaufelung (10, 11) des Primärschaufelrads (4) und des Sekundärschaufelrads (5) gegenüberstehen, wobei die Winkel der Schrägstellung der Beschaufelungen (10, 11) gegenüber der Axialschnittebene in dem ersten Arbeitsraum (6) entgegen denjenigen des zweiten Arbeitsraums (7) sind.

3. Fahrzeug gemäß einem der Ansprüche 1 oder 2, **dadurch gekennzeichnet, dass** das Primärschaufelrad (4) und/oder das Sekundärschaufelrad (5) derart axial verschiebbar angeordnet ist, dass die Schaufelräder (4, 5) axial voneinander abfahrbar sind.

4. Fahrzeug gemäß einem der Ansprüche 1 bis 3, **dadurch gekennzeichnet, dass** in der ersten mechanischen Triebverbindung (8) und/oder in der zweiten mechanischen Triebverbindung (9) eine Übersetzung ins Schnelle ausgeführt ist.

5. Fahrzeug gemäß einem der Ansprüche 2 bis 4, **dadurch gekennzeichnet, dass** die beiden Arbeitsräume (6, 7) als Ringräume ausgebildet sind, und einer der beiden Arbeitsräume (7) den anderen Arbeitsraum (6) radial umschließt.

6. Fahrzeug gemäß einem der Ansprüche 2 bis 5, **dadurch gekennzeichnet, dass** die sich jeweils gegenüberstehenden Beschaufelungen (10, 11) der beiden Schaufelräder (4, 5) eine voneinander abweichende Schaufelzahl aufweisen.

7. Fahrzeug gemäß einem der Ansprüche 1 bis 6, **dadurch gekennzeichnet, dass** eine Steuereinrichtung zum Befüllen und Entleeren der beiden Arbeitsräume (6, 7) mit Arbeitsmedium vorgesehen ist, welche derart eingerichtet ist, dass beide Arbeitsräume (6, 7) stets gleichzeitig befüllt und entleert werden.

8. Fahrzeug gemäß einem der Ansprüche 1 bis 7, **dadurch gekennzeichnet, dass** jeder Radachse (1, 2) von jeweils wenigstens einem Motor, insbesondere Elektromotor (12), angetrieben wird.

9. Fahrzeug gemäß einem der Ansprüche 1 bis 7, **dadurch gekennzeichnet, dass** die erste mechanische Triebverbindung (8) und die zweite mechanische Triebverbindung (9) in Form von Zahnradgetrieben und/oder Kegelradgetrieben ausgebildet sind.

10. Fahrzeug gemäß einem der Ansprüche 1 bis 9, **dadurch gekennzeichnet, dass** die Differenz zwischen den Beträgen der Drehzahl des Primärschaufelrads (4) und des Sekundärschaufelrads (5) 1 bis 20 % beträgt.

11. Fahrzeug gemäß einem der Ansprüche 1 bis 10, **dadurch gekennzeichnet, dass** beide mechanische Triebverbindungen (8, 9) aus in einer Draufsicht spiegelbildlich zueinander angeordneten Kegelradgetrieben mit jeweils genau zwei Kegelrädern (15, 16; 13, 14) bestehen.

12. Fahrzeug gemäß einem der Ansprüche 1 bis 10, **dadurch gekennzeichnet, dass** die zweite mechanische Triebverbindung (9) ein Kegelradgetriebe ist, das aus zwei Kegelrädern (13, 14) besteht, und die erste mechanische Triebverbindung (8) ein Kegelradgetriebe ist, das aus zwei Kegelrädern (15, 16) und einem zusätzlichen Zwischenrad (17) besteht.

13. Fahrzeug mit zwei gleichwertigen entgegengesetzten Fahrtrichtungen, insbesondere Schienenfahrzeug, wie Waggon oder Lokomotive,
13.1 mit wenigstens einer ersten und einer zweiten Radachse (1, 2), welche Antriebsräder oder mitlaufende Räder tragen;
13.2 mit einer verschleißfreien Bremse zum Abbremsen des Fahrzeugs, welche in einer Triebverbindung mit wenigstens einer Radachse (1, 2) steht; wobei
13.3 die verschleißfreie Bremse als hydrodynamische Bremse (3) mit einem Primärschaufelrad (4) und einem Sekundärschaufelrad (5), die sich derart gegenüberstehen, dass sie wenigstens einen mit einem Arbeitsmedium befüllbaren Arbeitsraum (6, 7) ausbilden, ausgeführt ist; und
13.4 das Primärschaufelrad (4) in einer ersten mechanischen Triebverbindung (8) mit der ersten Radachse (1) und das Sekundärschaufelrad (5) in einer zweiten mechanischen Triebverbindung (9) mit der zweiten Radachse (2) steht, wobei
13.5 eine der beiden Triebverbindungen (8, 9) eine Drehrichtungsumkehr beinhaltet, so dass sich das Primärschaufelrad (4) und das Sekundärschaufelrad (5) entgegengesetzt zueinander drehen; und
13.6 das Primärschaufelrad (4) und das Sekundärschaufelrad (5) miteinander zwei Arbeitsräume (6, 7) ausbilden, in welchen sich jeweils eine gegenüber einer Axialschnittebene schräg angeordnete Beschaufelung (10, 11) des Primärschaufelrads (4) und des Sekundärschaufelrads (5) gegenüberstehen, wobei die Winkel der Schrägstellung der Beschaufelungen (10, 11) gegenüber der Axialschnittebene in dem ersten Arbeitsraum (6) entgegen denjenigen des zweiten Arbeitsraums (7) sind; **dadurch gekennzeichnet dass**
13.7 die Winkel der Schrägstellung der Beschaufelungen (10, 11) gegenüber der Axialschnittebene in dem ersten Arbeitsraum (6) in ihrem Betrag verschieden gegenüber denjenigen des zweiten Arbeitsraums (7) sind.

## Claims

1. A vehicle with two equivalent opposite running directions, especially a rail vehicle such as a wagon or locomotive;
1.1. with at least a first and second axle (1, 2) which carry drive wheels or travelling wheels;
1.2. with a wear-free brake for braking the vehicle which is in driving connection with the axles (1, 2), with
1.3. the wear-free brake being arranged as a hydrodynamic brake (3) with a primary blade wheel (4) and a secondary blade wheel (5) which are opposite of each other in such a way that they form at least one working chamber (6, 7) which can be filled with a working medium, and
1.4. the primary blade wheel (4) is in a first mechanical drive connection (8) with the first axle (1) and the secondary blade wheel (5) in a second mechanical drive connection (9) with the second axle (2), with
1.5. one of the two drive connections (8, 9) comprising a reversal of direction of rotation, so that the primary blade wheel (4) and the secondary blade wheel (5) rotate in an opposite direction with respect to each other, **characterized in that**
1.6. the first mechanical drive connection (8) has a transmission which deviates from the second mechanical drive connection (9), so that in braking operation a difference is obtained between the rates of the speed of the primary blade wheel (4) and the secondary blade wheel (5).

2. A vehicle according to claim 1, **characterized in that** the primary blade wheel (4) and the secondary blade wheel (5) jointly form two working chambers (6, 7) in which a blading (10, 11) each of the primary blade wheel (4) and the secondary blade wheel (5) stand opposite of one another, which blading is arranged in an oblique manner relative to a plane of axial intersection, with the angles of such oblique positioning of the bladings (10, 11) relative to the plane of axial intersection in the first working chamber (6) being opposite of that of the second working chamber (7).

3. A vehicle according to one of the claims 1 or 2, **characterized in that** the primary blade wheel (4) and/or the secondary blade wheel (5) are arranged to be axially displaceable in such a way that the blade wheels (4, 5) can be axially moved away from one another.

4. A vehicle according to one of the claims 1 to 3, **characterized in that** a speed increasing transmission is arranged in the first mechanical drive connection (8) and/or in the second mechanical drive connection (9).

5. A vehicle according to one of the claims 2 to 4, **characterized in that** the two working chambers (6, 7) are arranged as annular chambers and one of the two working chambers (7) radially encloses the other working chamber (6).

6. A vehicle according to one of the claims 2 to 5, **characterized in that** the mutually opposite bladings (10, 11) of the two blade wheels (4, 5) have a number of blades which deviate from one another.

7. A vehicle according to one of the claims 1 to 6, **characterized in that** a control device is provided for filling and discharging the two working chambers (6, 7) with working medium, which device is arranged in such a way that both working chambers (6, 7) are filled and discharged always simultaneously.

8. A vehicle according to one of the claims 1 to 7, **characterized in that** each axle (1, 2) is driven by at least one motor, especially an electromotor (12).

9. A vehicle according to one of the claims 1 to 7, **characterized in that** the first mechanical drive connection (8) and the second mechanical drive connection (9) are arranged in the form of toothed gears and/or bevel gears.

10. A vehicle according to one of the claims 1 to 9, **characterized in that** the difference between the rates of the speed of the primary blade wheel (4) and the secondary blade wheel (5) is 1% to 20%.

11. A vehicle according to one of the claims 1 to 10, **characterized in that** both mechanical drive connections (8, 9) consist of bevel gears which are arranged with respect to each other in a mirror-inverted way and each comprise precisely two bevel wheels (15, 16; 13, 14).

12. A vehicle according to one of the claims 1 to 10, **characterized in that** the second mechanical drive connection (9) is a bevel gear which consists of two bevel wheels (13, 14) and the first mechanical drive connection (8) which consists of two bevel wheels (15, 16) and an additional intermediate wheel (17).

13. A vehicle with two equivalent opposite running directions, especially a rail vehicle such as a wagon or locomotive;
13.1. with at least a first and second axle (1, 2) which carry drive wheels or travelling wheels;
13.2. with a wear-free brake for braking the vehicle which is in driving connection with the axles (1, 2), with
13.3. the wear-free brake being arranged as a hydrodynamic brake (3) with a primary blade wheel (4) and a secondary blade wheel (5) which are opposite of each other in such a way that they form at least one working chamber (6, 7) which can be filled with a working medium, and
13.4. the primary blade wheel (4) is in a first mechanical drive connection (8) with the first axle (1) and the secondary blade wheel (5) in a second mechanical drive connection (9) with the second axle (2), with
13.5. one of the two drive connections (8, 9) comprising a reversal of direction of rotation, so that the primary blade wheel (4) and the secondary blade wheel (5) rotate in an opposite direction with respect to each other, and
13.6. the primary blade wheel (4) and the secondary blade wheel (5) jointly form two working chambers (6, 7) in which a blading (10, 11) each of the primary blade wheel (4) and the secondary blade wheel (5) stand opposite of one another, which blading is arranged in an oblique manner relative to a plane of axial intersection, with the angles of such oblique positioning of the bladings (10, 11) relative to the plane of axial intersection in the first working chamber (6) being opposite of that of the second working chamber (7);
**characterized in that**
13.7. the angles of the oblique positioning of the bladings (10, 11) relative to the plane of axial intersection in the first working chamber (6) differ in their amount relative to that of the second working chamber (7).

## Revendications

1. Véhicule ayant deux sens de la marche équivalents, en particulier véhicule ferroviaire, tel qu'un wagon ou une locomotive,
1.1 avec au moins un premier essieu et un deuxième (1, 2), qui portent des roues motrices ou des roues porteuses,
1.2 avec un frein sans usure pour le freinage du véhicule, qui est en liaison motrice avec les essieux (1, 2) ; dans lequel
1.3 le frein sans usure est réalisé comme un frein hydrodynamique (3) avec une roue à aubes primaire (4) et une roue à aubes secondaire (5), qui se font face de telle façon qu'elles forment au moins un espace de travail (6, 7) pouvant être rempli par un fluide de travail ; et
1.4 la roue à aubes primaire (4) est dans une première liaison motrice mécanique (8) avec le premier essieu (1) et la roue à aubes secondaire (5) dans une deuxième liaison motrice mécanique (9) avec le deuxième essieu (2),
1.5 l'une des deux liaisons motrices (8, 9) comprenant une inversion du sens de rotation, de sorte que la roue à aubes primaire (4) et la roue à aubes secondaire (5) tournent en sens inverse l'une de l'autre ;
**caractérisé en ce que**
1.6 la première liaison motrice mécanique (8) présente une multiplication différente de la deuxième liaison motrice mécanique (9), de sorte que pendant le freinage, il se crée une différence entre les grandeurs de vitesse de rotation de la roue à aubes primaire (4) et de la roue à aubes secondaire (5).

2. Véhicule selon la revendication 1, **caractérisé en ce que** la roue à aubes primaire (4) et la roue à aubes secondaire (5) forment ensemble deux espaces de travail (6, 7) dans lesquels des aubages (10, 11) de la roue à aubes primaire (4) et de la roue à aubes secondaire (5) inclinés par rapport à un plan de coupe axial se font face, et les angles d'obliquité des aubages (10, 11) par rapport au plan de coupe axial dans le premier espace de travail (6) sont inverses de ceux du deuxième espace de travail (7).

3. Véhicule selon l'une des revendications 1 ou 2, **caractérisé en ce que** la roue à aubes primaire (4) et/ou la roue à aubes secondaire (5) sont disposées de façon mobile dans le sens axial de telle façon que les roues à aubes (4, 5) peuvent être écartées l'une de l'autre dans le sens axial.

4. Véhicule selon l'une des revendications 1 à 3, **caractérisé en ce qu'**une multiplication à la vitesse rapide est réalisée dans la première liaison motrice mécanique (8) et/ou dans la deuxième liaison motrice mécanique (9).

5. Véhicule selon l'une des revendications 2 à 4, **caractérisé en ce que** les deux espaces de travail (6, 7) sont conçus comme des espaces annulaires et l'un des deux espaces de travail (7) entoure l'autre espace de travail (6) dans le sens radial.

6. Véhicule selon l'une des revendications 2 à 5, **caractérisé en ce que** les aubages (10, 11) se faisant respectivement face des deux roues à aubes (4, 5) présentent un nombre d'aubes différent.

7. Véhicule selon l'une des revendications 1 à 6, **caractérisé en ce qu'**il est prévu un dispositif de régulation pour le remplissage et la vidange des deux espaces de travail (6, 7) avec du fluide de travail, qui est disposé de telle façon que les deux espaces de travail (6, 7) sont toujours remplis et vidés simultanément.

8. Véhicule selon l'une des revendications 1 à 7, **caractérisé en ce que** chaque essieu (1, 2) est entraîné par au moins un moteur, en particulier un moteur électrique (12).

9. Véhicule selon l'une des revendications 1 à 7, **caractérisé en ce que** la première liaison motrice mécanique (8) et la deuxième liaison motrice mécanique (9) sont réalisées sous la forme d'engrenages à roues dentées et/ou d'engrenages à pignons coniques.

10. Véhicule selon l'une des revendications 1 à 9, **caractérisé en ce que** la différence entre les grandeurs de la vitesse de rotation de la roue à aubes primaire (4) et de la roue à aubes secondaire (5) est de 1 à 20 %.

11. Véhicule selon l'une des revendications 1 à 10, **caractérisé en ce que** les deux liaisons motrices mécaniques (8, 9) se composent d'engrenages à pignons coniques disposés en miroir l'un par rapport à l'autre en vue de dessus avec chacun précisément deux pignons coniques (15, 16 ; 13, 14).

12. Véhicule selon l'une des revendications 1 à 10, **caractérisé en ce que** la deuxième liaison motrice mécanique (9) est un engrenage à pignons coniques composé de deux pignons coniques (13, 14) et la première liaison motrice mécanique (8) est un engrenage à pignons coniques qui se compose de deux pignons coniques (15, 16) et d'une roue intermédiaire (17) supplémentaire.

13. Véhicule ayant deux sens de la marche équivalents, en particulier véhicule ferroviaire, tel qu'un wagon ou une locomotive,
13.1 avec au moins un premier essieu et un deuxième (1, 2), qui portent des roues motrices ou des roues porteuses,
13.2 avec un frein sans usure pour le freinage du véhicule, qui est en liaison motrice avec les essieux (1, 2) ; dans lequel
13.3 le frein sans usure est réalisé comme un frein hydrodynamique (3) avec une roue à aubes primaire (4) et une roue à aubes secondaire (5), qui se font face de telle façon qu'elles forment au moins un espace de travail (6, 7) pouvant être rempli par un fluide de travail ; et
13.4 la roue à aubes primaire (4) est dans une première liaison motrice mécanique (8) avec le premier essieu (1) et la roue à aubes secondaire (5) dans une deuxième liaison motrice mécanique (9) avec le deuxième essieu (2),
13.5 l'une des deux liaisons motrices (8, 9) comprenant une inversion du sens de rotation, de sorte que la roue à aubes primaire (4) et la roue à aubes secondaire (5) tournent en sens inverse l'une de l'autre ; et
13.6 la roue à aubes primaire (4) et la roue à aubes secondaire (5) formant ensemble deux espaces de travail (6, 7) dans lesquels des aubages (10, 11) de la roue à aubes primaire (4) et de la roue à aubes secondaire (5) inclinés par rapport à un plan de coupe axial se font face, et les angles d'obliquité des aubages (10, 11) par rapport au plan de coupe axial dans le premier espace de travail (6) sont inverses de ceux du deuxième espace de travail (7) ;
**caractérisé en ce que**
13.7 les angles d'obliquité des aubages (10, 11) par rapport au plan de coupe axial dans le premier espace de travail (6) ont une grandeur différente de ceux du deuxième espace de travail (7).
